# EUROPÄISCHE PATENTANMELDUNG

(11) **EP 2 461 060 A1**
(43) Veröffentlichungstag der Anmeldung: **06.06.2012**
(21) Anmeldenummer: 11191032.9
(22) Anmeldetag: 29.11.2011
(51) Int. Cl.: F16C 33/58, F16C 35/06

(54) **Wälzlager**

(30) Priorität: 02.12.2010 DE 102010062328
(71) Anmelder: Aktiebolaget SKF, 41 550 Göteborg (SE)
(72) Erfinder: Huber, Johann, 3352 St. Peter/Au (AT); Lulek, Andreas, 4431 Heidershofen (AT); Pichler, Andreas, 4407 Stadlkirchen bei Dietach (AT)
(74) Vertreter: Schonecke, Mitja

(57) **Zusammenfassung**

Die Erfindung betrifft ein Wälzlager mit einem Innenring (2), der eine Bohrungsfläche (7) aufweist, die zwischen einer ersten axialen Endfläche (11) und einer zweiten axialen Endfläche (12) des Innenrings (2) ausgebildet ist, einem Außenring (3), der den Innenring (2) radial umgibt und Wälzkörpern (4), die zwischen dem Innenring (2) und dem Außenring (3) abrollen. Der Innenring (2) weist im Bereich der Bohrungsfläche (7) eine Haltenut (18) zum Fixieren eines Demontagewerkzeugs auf, die als eine in Umfangsrichtung verlaufende radiale Vertiefung ausgebildet ist.

## Beschreibung

Die Erfindung betrifft ein Wälzlager, insbesondere ein Wälzlager eines Elektromotors.

Wälzlager sind in einer Vielzahl von Ausführungsformen für viele verschiedene Anwendungen bekannt. Gerade bei Wälzlagern von sehr hochwertigen Komponenten, wie beispielsweise von Fahrmotoren für Schienenfahrzeuge, die über einen sehr langen Zeitraum genutzt werden, können ein Austausch oder eine Reparatur und damit eine Demontage des Wälzlagers erforderlich werden. Um den Aufwand für die Demontage und die Ausfallzeit der betroffenen Maschine möglichst gering zu halten, kommen häufig spezielle Demontagewerkzeuge zum Einsatz, die beispielsweise das Abziehen des Innenrings des Wälzlagers von einer Welle erleichtern. Hierzu kann am Innenring ein Gewinde zum Anschrauben des Demontagewerkzeugs vorgesehen sein.

Bei elektrischen Fahrmotoren und anderen Elektromotoren kann vorgesehen sein, das Wälzlager von seiner Einbauumgebung derart elektrisch zu isolieren, dass ein Stromdurchgang durch das Wälzlager, der in der Regel auf Dauer zu einer Schädigung des Wälzlagers führt, zuverlässig verhindert wird. Allerdings ist es produktionstechnisch sehr schwierig, ein für die Fixierung eines Demontagewerkzeugs vorgesehenes Gewinde beispielsweise durch eine Beschichtung elektrisch zu isolieren ohne dabei dessen Einsatzfähigkeit zu beeinträchtigen. Selbst wenn eine Beschichtung des Gewindes gelingt, besteht das Risiko, dass die Beschichtung beim Anbringen des Demontagewerkzeugs beschädigt wird. Es ist daher erforderlich, andere Maßnahmen zu ergreifen, die eine einfache Demontage des Wälzlagers ermöglichen.

Der Erfindung liegt die Aufgabe zugrunde, ein Wälzlager so auszubilden, dass eine Demontage des Wälzlagers mit wenig Aufwand möglich ist.

Diese Aufgabe wird durch ein Wälzlager mit der Merkmalskombination des Anspruchs 1 gelöst.

Das erfindungsgemäße Wälzlager weist einen Innenring mit einer Bohrungsfläche auf, die zwischen einer ersten axialen Endfläche und einer zweiten axialen Endfläche des Innenrings ausgebildet ist. Weiterhin weist das Wälzlager einen Außenring, der den Innenring radial umgibt, und Wälzkörper auf, die zwischen dem Innenring und dem Außenring abrollen. Der Innenring weist im Bereich der Bohrungsfläche eine Haltenut zum Fixieren eines Demontagewerkzeugs auf, die als eine in Umfangsrichtung verlaufende radiale Vertiefung ausgebildet ist.

Das erfindungsgemäße Wälzlager hat den Vorteil, dass eine Demontage mit wenig Aufwand möglich ist. Ein weiterer Vorteil besteht darin, dass die erfindungsgemäße Ausgestaltung des Wälzlagers mit einer Vielzahl von Anwendungen kompatibel ist. Insbesondere ist die erfindungsgemäße Ausgestaltung des Wälzlagers mit Anwendungen kompatibel, die eine Beschichtung des Innenrings im Bereich der Bohrungsfläche erfordern.

Die Haltenut kann sich durchgehend über den gesamten Innenumfang des Innenrings erstrecken. Dies hat den Vorteil, dass eine große Angriffsfläche für das Demontagewerkzeug zur Verfügung steht und demgemäß mit dem Demontagewerkzeug große Kräfte auf den Innenring ausgeübt werden können.

Ebenso ist es auch möglich, dass die Haltenut in Umfangsrichtung mehrfach unterbrochen ist und demgemäß mehrere separate Nutabschnitte aufweist.

Die Haltenut kann sich wenigstens bereichsweise radial nach innen erweitern. Dies wirkt sich beispielsweise positive auf die mechanische Belastbarkeit der Haltenut auf.

Der Innenring kann im Bereich der Bohrungsfläche mehrere Einführnuten aufweisen, die als in Axialrichtung verlaufende radiale Vertiefungen ausgebildet sind und in die Haltenut münden. Die Einführnuten erleichtern das Anbringen des Demontagewerkzeugs und ermöglichen eine sehr einfache konstruktive Ausgestaltung des Demontagewerkzeugs. Die Einführnuten können sich von der ersten axialen Endfläche des Innenrings bis zur Haltenut erstrecken. Weiterhin können die Einführnuten über den Umfang der Bohrungsfläche verteilt angeordnet sein. Insbesondere können die Einführnuten gleichmäßig über den Umfang der Bohrungsfläche verteilt sein. Die Einführnuten und/oder die Haltenut können wenigstens in einem Teilbereich ihres Querschnitts rechteckig ausgebildet sein.

Der Innenring kann im Bereich der Bohrungsfläche eine elektrisch isolierende Beschichtung aufweisen. Auf diese Weise kann das Wälzlager vor einem schädlichen Stromdurchgang geschützt werden. Der Innenring kann weiterhin im Bereich der ersten axialen Endfläche und/oder im Bereich der zweiten axialen Endfläche die elektrisch isolierende Beschichtung aufweisen. Dadurch ist der Schutz vor einem Stromdurchgang auch in einer Einbauumgebung sichergestellt, in welcher der Innenring axial an einer nicht isolierten Komponente anliegt. Bei der elektrisch isolierenden Beschichtung kann es sich beispielsweise ein Keramikmaterial oder um ein sonstiges elektrisch isolierendes Material handeln.

Die Haltenut und/oder die Einführnuten können wenigstens eine unbeschichtete Fläche aufweisen. Die unbeschichtete Fläche kann im Bereiche eines Nutbodens und/oder in an den Nutboden angrenzenden Bereichen von Nutwänden der Haltenut und/oder der Einführnuten ausgebildet sein. Dies erleichtert die Herstellung des Wälzlagers.

Die Haltenut und/oder die Einführnuten können wenigstens eine mit der isolierenden Beschichtung beschichtete Fläche aufweisen. Die beschichtete Fläche kann in Bereichen von Nutwänden der Haltenut und/oder der Einführnuten ausgebildet sein, die von einem Nutboden beabstandet sind. Dadurch kann auch bei einer nicht vollflächigen Beschichtung der Haltenut eine ausreichende elektrische Isolierwirkung erzielt werden. Insbesondere kann die beschichtete Fläche in Bereichen der Nutwände der Haltenut ausgebildet sein, in denen sich die Haltenut radial nach innen erweitert. In diesen Bereichen kann die Beschichtung mit einem vergleichsweise geringen Aufwand aufgebracht werden.

Die Haltenut kann Funktionsflächen und Abstandsflächen aufweisen, wobei die Funktionsflächen als Anlageflächen des Demontagewerkzeugs dienen und die Abstandsflächen außerhalb der Funktionsflächen angeordnet und als mit der elektrisch isolierenden Beschichtung beschichtete Flächen ausgebildet sind. Auf diese Weise kann sowohl eine definierte mechanische Anlage des Demontagewerkzeugs als auch eine zuverlässige elektrische Isolierung realisiert werden.

Die Bohrungsfläche des Innenrings kann beidseits axial neben der Haltenut einen unterschiedlichen Durchmesser aufweisen. Insbesondere kann der Durchmesser der Bohrungsfläche zur ersten axialen Endfläche hin größer sein als zur zweiten axialen Endfläche hin. Dadurch wird Freiraum für das Einführen des Demontagewerkzeugs geschaffen.

Die Haltenut und/oder die Einführnuten können in einem Axialbereich der Bohrungsfläche des Innenrings angeordnet sein, der nicht mit den Wälzkörpern überlappt. Auf diese Weise können negative Auswirkungen der Haltenut und/oder der Einführnuten auf die Tragfähigkeit und die Lebensdauer des Wälzlagers weitgehend vermieden werden.

Der Außenring kann mehrere axial verlaufende Gewindebohrungen aufweisen. Die Gewindebohrungen können beispielsweise der Befestigung des Demontagewerkzeugs am Außenring dienen.

Das Wälzlager kann als eine Komponente eines Elektromotors ausgebildet sein. Bei Elektromotoren ist der Wunsch nach einer elektrischen Isolierung des Wälzlagers in der Regel besonders ausgeprägt. Das Wälzlager kann beispielsweise als eine Komponente eines elektrischen Fahrmotors, insbesondere eines elektrischen Fahrmotors eines Schienenfahrzeugs, ausgebildet sein. Das Wälzlager kann als ein Radiallager, insbesondere als ein Radialzylinderrollenlager, ausgebildet sein.

Die Erfindung wird nachfolgend anhand des in den Figuren dargestellten Ausführungsbeispiels erläutert.

Es zeigen:
- Figur 1: ein Ausführungsbeispiel eines erfindungsgemäß ausgebildeten Wälzlagers in Schnittdarstellung,
- Figur 2: das in Figur 1 dargestellte Ausführungsbeispiel des Wälzlagers in Seitenansicht und
- Figur 3: das in den Figuren 1 und 2 dargestellte Ausführungsbeispiel des Wälzlagers im montierten Zustand in Schnittdarstellung.

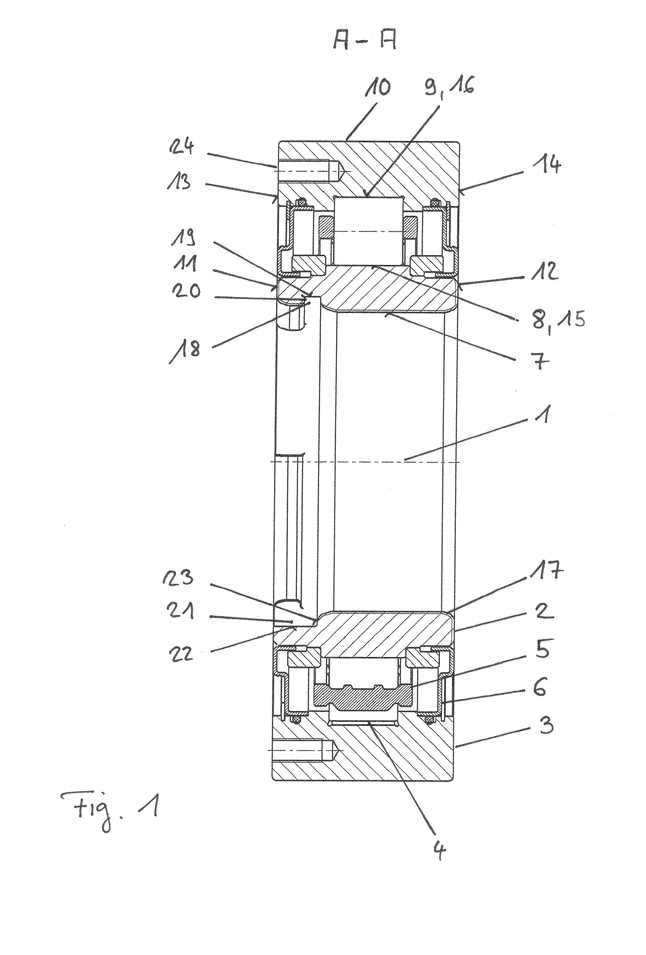

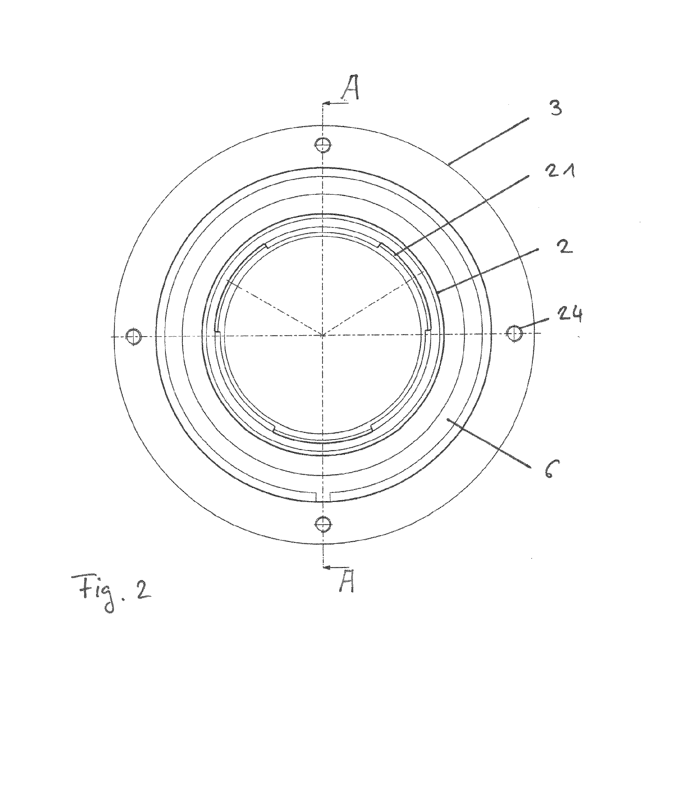

Figur 1 zeigt ein Ausführungsbeispiel eines erfindungsgemäß ausgebildeten Wälzlagers in Schnittdarstellung. Eine zugehörige Seitenansicht ist in Figur 2 dargestellt.

In Figur 1 ist eine Rotationsachse 1 des Wälzlagers eingezeichnet, auf die jeweils etwaige Richtungsangaben bezogen sind, wenn nichts anderes gesagt ist. Demgemäß ist als Axialrichtung jede Richtung parallel zur Rotationsachse 1 und als Radialrichtung jede Richtung anzusehen, welche die Rotationsachse 1 senkrecht schneidet. Dabei bedeutet radial nach außen von der Rotationsachse 1 weg und radial nach innen zur Rotationsachse 1 hin gerichtet.

Das Wälzlager weist einen Innenring 2 und einen Außenring 3 auf, der den Innenring 2 radial umgibt. Im radialen Zwischenraum zwischen dem Innenring 2 und dem Außenring 3 rollen zylinderförmig ausgebildete Wälzkörper 4 ab. Dabei werden die Wälzkörper 4 in einem Käfig 5 geführt. Der radiale Zwischenraum zwischen dem Innenring 2 und dem Außenring 3 ist axial beidseits durch je eine Dichtung 6 abgedichtet, die insbesondere als eine Labyrinthdichtung ausgebildet sein kann. Der Innenring 2, der Außenring 3 und die Wälzkörper 4 sind aus Metall gefertigt.

Der Innenring 2 weist eine radial innere Umfangsfläche auf, die im Folgenden als Bohrungsfläche 7 bezeichnet wird und eine radial äußere Umfangsfläche, die im Folgenden als Mantelfläche 8 bezeichnet wird. In analoger Weise weist der Außenring 3 eine als Bohrungsfläche 9 bezeichnete radial innere Umfangsfläche und eine als Mantelfläche 10 bezeichnete radial äußere Umfangsfläche auf. Weiterhin weist der Innenring 2 eine erste axiale Endfläche 11 und eine zweite axiale Endfläche 12 auf, die jeweils die Bohrungsfläche 7 und die Mantelfläche 8 des Innenrings 2 miteinander verbinden. Der Außenring 3 weist eine erste axiale Endfläche 13 und eine zweite axiale Endfläche 14 auf, die jeweils die Bohrungsfläche 9 und die Mantelfläche 10 des Außenrings 3 miteinander verbinden.

Im Bereich der Mantelfläche 8 des Innenrings 2 ist eine innere Wälzkörperlaufbahn 15 ausgebildet. Im Bereich der Bohrungsfläche 9 des Außenrings 3 ist eine äußere Wälzkörperlaufbahn 16 ausgebildet. Die Wälzkörper 4 rollen auf der inneren Wälzkörperlaufbahn 15 und auf der äußeren Wälzkörperlaufbahn 16 ab.

Im Bereich der Bohrungsfläche 7 sowie der ersten axialen Endfläche 11 und der zweiten axialen Endfläche 12 des Innenrings 2 ist jeweils eine elektrisch isolierende Beschichtung 17 ausgebildet. Bei dieser Beschichtung 17 kann es sich beispielsweise um ein Keramikmaterial oder um ein sonstiges elektrisch isolierendes Material handeln.

Die Bohrungsfläche 7 des Innenrings 2 weist eine Haltenut 18 auf, die als eine in Umfangsrichtung verlaufende radiale Vertiefung ausgebildet ist und einen Nutboden 19 und Nutwände 20 aufweist. Beim dargestellten Ausführungsbeispiel ist die Haltenut 18 im Axialbereich zwischen der ersten axialen Endfläche 11 des Innenrings 2 und der inneren Wälzkörperlaufbahn 15 bzw. den Wälzkörpern 4 ausgebildet und erstreckt sich durchgehend über den gesamten Umfang der Bohrungsfläche 7 des Innenrings 2. Dabei weist die Haltenut 18 großteils, insbesondere in der Nähe des Nutbodens 19, einen rechteckigen Querschnitt auf. Radial einwärts im Anschluss an den rechteckigen Querschnitt erweitert sich die Haltenut 18 konisch. Im Bereich des Nutbodens 19 und den daran angrenzenden Bereichen der Nutwände 20 ist keine Beschichtung 17 vorhanden. Diese Bereiche dienen als Anlageflächen für ein nicht figürlich dargestelltes Demontagewerkzeug bei der Demontage des Wälzlagers und werden im Folgenden auch als Funktionsflächen bezeichnet. Die Beschichtung 17 beginnt erst dort, wo sich die Haltenut 18 konisch erweitert. Diese Bereiche dienen nicht als Anlageflächen für das Demontagewerkzeug, sondern als Abstandsflächen und liegen außerhalb der Funktionsflächen.

Im Axialbereich zwischen der ersten axialen Endfläche 11 des Innenrings 2 und der Haltenut 18 weist die Bohrungsfläche 7 einen größeren Durchmesser auf als im Axialbereich zwischen der zweiten axialen Endfläche 12 des Innenrings 2 und der Haltenut 18, d. h. der erstgenannte Axialbereich ist gegenüber dem zweitgenannten Axialbereich radial nach außen versetzt. Dies bedeutet auch, dass die Bohrungsfläche 7 des Innenrings 2 axial beidseits der Haltenut 18 einen unterschiedlichen Durchmesser aufweist.

Die Bohrungsfläche 7 des Innenrings 2 weist weiterhin drei Einführnuten 21 auf, die als in Axialrichtung verlaufende radiale Vertiefungen ausgebildet sind und jeweils einen Nutboden 22 und Nutwände 23 aufweisen. Die Einführnuten 21 sind in Umfangsrichtung der Bohrungsfläche 7 des Innenrings 2 äquidistant zueinander angeordnet und erstrecken sich jeweils von der ersten axialen Endfläche 11 des Innenrings 2 bis zur Haltenut 18 und münden übergangslos in die Haltenut 18. Die Einführnuten 21 weisen jeweils die gleiche Tiefe wie die Haltenut 18 auf, d. h. die Nutböden 22 der Einführnuten 21 und der Nutboden 19 der Haltenut 18 sind im gleichen radialen Abstand zur Rotationsachse 1 ausgebildet. Zusammen genommen erstrecken sich die Einführnuten 21 über mehr als die Hälfte der Umfangserstreckung der Bohrungsfläche 7 des Innenrings 2. Analog zu den Haltenuten 18 ist auch bei den Einführnuten 21 jeweils im Bereich des Nutbodens 22 und den daran angrenzenden Regionen der Nutwände 23 keine Beschichtung 17 vorhanden.

Wie bereits erwähnt, dienen die Haltenuten 18 der Fixierung des Demontagewerkzeugs. Die Einführnuten 21 ermöglichen es, das Demontagewerkzeug der Haltenut 18 zuzuführen.

Der Außenring 3 weist vier axiale Gewindebohrungen 24 auf, die jeweils als Sacklochbohrungen ausgebildet sind und sich ausgehend von der ersten axialen Endfläche 13 des Außenrings 3 über einen Teilbereich der axialen Breite des Außenrings 3 erstrecken. Die Gewindebohrungen 24 dienen der Befestigung des Demontagewerkzeugs.

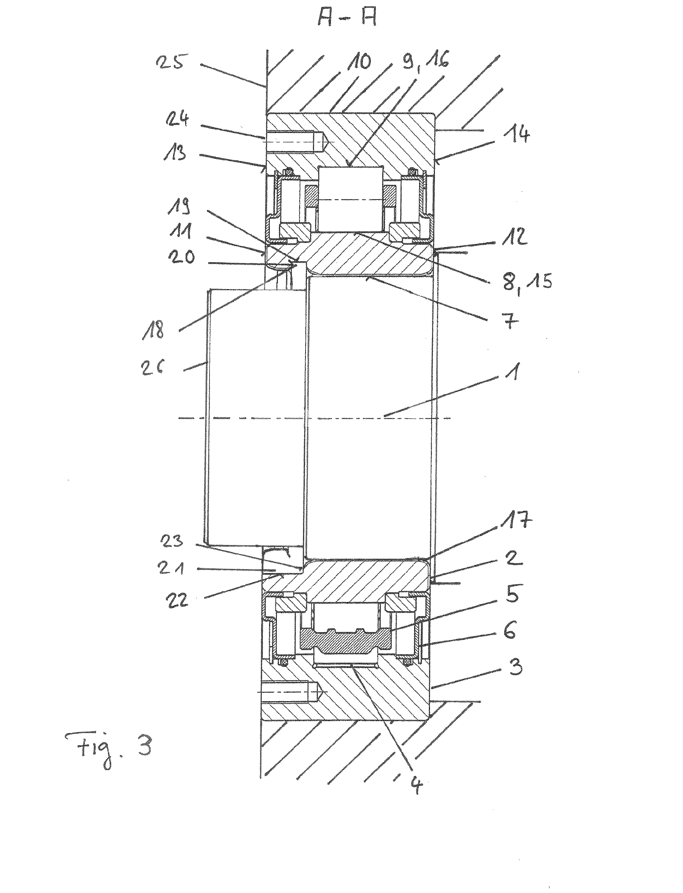

Figur 3 zeigt das in den Figuren 1 und 2 dargestellte Ausführungsbeispiel des Wälzlagers im montierten Zustand in Schnittdarstellung.

Das Wälzlager ist in einem Gehäuse 25 montiert und dient der drehbaren Lagerung einer Welle 26. Das Gehäuse 25 und die Welle 26 sind jeweils aus Metall gefertigt. Der Außenring 3 des Wälzlagers ist drehfest mit dem Gehäuse 25 verbunden. Die drehfeste Verbindung kann beispielsweise durch einen Pressverbund zwischen dem Außenring 3 und dem Gehäuse 25 realisiert sein. Dabei kann die Mantelfläche 10 des Außenrings 3 als eine Sitzfläche ausgebildet sein und radial gegen eine entsprechend ausgebildete Gegenfläche des Gehäuses 25 gepresst werden. Die radiale Pressung lässt sich durch ein Übermaß zwischen dem Außenring 3 und der aufnehmenden Bohrung des Gehäuses 25 erreichen.

Der Innenring 2 des Wälzlagers ist drehfest mit der Welle 26 verbunden. Die drehfeste Verbindung kann beispielsweise durch einen Pressverbund zwischen dem Innenring 2 und der Welle 26 realisiert sein. Dabei kann die Bohrungsfläche 7 des Innenrings 2 als eine Sitzfläche ausgebildet sein und radial gegen eine entsprechend ausgebildete Gegenfläche der Welle 26 gepresst werden. Die radiale Pressung lässt sich durch ein Übermaß zwischen der Welle 26 und dem Innenring 2 erreichen.

Der Innenring 2 liegt ausschließlich mit seiner Beschichtung 17 an der Welle 26 an. Es ist kein direkter Metall-Metall-Kontakt zwischen dem Innenring 2 und der Welle 26 ausgebildet. Dies bedeutet, dass der Innenring 2 gegen die Welle 26 elektrisch isoliert ist und somit kein nennenswerter Stromfluss zwischen dem Innenring 2 und der Welle 26 möglich ist. Somit kann es auch dann nicht zu einem nennenswerten Stromfluss durch das Wälzlager kommen, wenn das Gehäuse 25 und die Welle 26 auf einem unterschiedlichen elektrischen Potential liegen.

Die elektrische Isolation zwischen dem Innenring 2 und der Welle 26 wird auch nicht durch die Haltenut 18 und durch die Einführnuten 21 beeinträchtigt, obwohl jeweils im Bereich der Nutböden 19, 22 und in den angrenzenden Bereichen der Nutwände 20, 23 keine Beschichtung 17 vorhanden ist und dort somit blankes Metall vorliegt. Wie aus der Figur 3 hervorgeht, sind die blanken Bereiche des Innenrings 2, zu denen beim dargestellten Ausführungsbeispiel auch die Funktionsflächen der Haltenut 18 gehören, in einem Abstand zur Welle 26 angeordnet und berühren die Welle 26 nicht, so dass es nicht zu einer elektrisch leitenden Verbindung zwischen dem Innenring 2 und der Welle 26 kommt. Weiterhin ist aus Fig. 3 ersichtlich, dass zwischen der Welle 26 und der Bohrungsfläche 7 des Innenrings 2 bereichsweise ein radialer Spalt ausgebildet ist. Dieser Spalt resultiert zum einen aus dem radialen Versatz der Bohrungsfläche 7 des Innenrings 2 axial beidseits der Haltenut 18 und zum anderen aus der gestuften Ausbildung der Welle 26 beim dargestellten Ausführungsbeispiel und ermöglichet ein axiales Einführen des Demontagewerkzeugs. Das Demontagewerkzeug kann insbesondere so ausgebildet sein, dass es über Radialvorsprünge verfügt, welche durch die Einführnuten 21 in die Haltenut 18 eingeführt werden können. Durch ein Verdrehen des Demontagewerkzeugs inklusive der Radialvorsprünge relativ zum Innenring 2 werden die Radialvorsprünge in Umfangsrichtung zu den Einführnuten 21 versetzt und dadurch bezüglich einer Axialbewegung formschlüssig in der Haltenut 18 fixiert. Somit kann der Innenring 2 mit Hilfe des Demontagewerkzeugs von der Welle 26 abgezogen werden.

### Bezugszeichenliste

- 1: Rotationsachse
- 2: Innenring
- 3: Außenring
- 4: Wälzkörper
- 5: Käfig
- 6: Dichtung
- 7: Bohrungsfläche
- 8: Mantelfläche
- 9: Bohrungsfläche
- 10: Mantelfläche
- 11: Erste axiale Endfläche
- 12: Zweite axiale Endfläche
- 13: Erste axiale Endfläche
- 14: Zweite axiale Endfläche
- 15: Innere Wälzkörperlaufbahn
- 16: Äußere Wälzkörperlaufbahn
- 17: Beschichtung
- 18: Haltenut
- 19: Nutboden
- 20: Nutwand
- 21: Einführnut
- 22: Nutboden
- 23: Nutwand
- 24: Gewindebohrung
- 25: Gehäuse
- 26: Welle

## Patentansprüche

1. Wälzlager mit
- einem Innenring (2), der eine Bohrungsfläche (7) aufweist, die zwischen einer ersten axialen Endfläche (11) und einer zweiten axialen Endfläche (12) des Innenrings (2) ausgebildet ist,
- einem Außenring (3), der den Innenring (2) radial umgibt,
- Wälzkörpern (4), die zwischen dem Innenring (2) und dem Außenring (3) abrollen,
- wobei der Innenring (2) im Bereich der Bohrungsfläche (7) eine Haltenut (18) zum Fixieren eines Demontagewerkzeugs aufweist, die als eine in Umfangsrichtung verlaufende radiale Vertiefung ausgebildet ist.

2. Wälzlager nach Anspruch 1, wobei der Innenring (2) im Bereich der Bohrungsfläche (7) mehrere Einführnuten (21) aufweist, die als in Axialrichtung verlaufende radiale Vertiefungen ausgebildet sind und in die Haltenut (18) münden.

3. Wälzlager nach einem der vorhergehenden Ansprüche, wobei der Innenring (2) im Bereich der Bohrungsfläche (7) eine elektrisch isolierende Beschichtung (17) aufweist.

4. Wälzlager nach Anspruch 3, wobei die Haltenut (18) und/oder die Einführnuten (21) wenigstens eine unbeschichtete Fläche aufweisen.

5. Wälzlager nach einem der Ansprüche 3 oder 4, wobei die Haltenut (18) und/oder die Einführnuten (21) wenigstens eine mit der isolierenden Beschichtung (17) beschichtete Fläche aufweisen.

6. Wälzlager nach einem der Ansprüche 3 bis 5, wobei die Haltenut (18) Funktionsflächen und Abstandsflächen aufweist, wobei die Funktionsflächen als Anlageflächen des Demontagewerkzeugs dienen und die Abstandsflächen, außerhalb der Funktionsflächen angeordnet und als mit der elektrisch isolierenden Beschichtung (17) beschichtete Flächen ausgebildet sind.

7. Wälzlager nach einem der vorhergehenden Ansprüche, wobei die Bohrungsfläche (7) des Innenrings (2) beidseits axial neben der Haltenut (18) einen unterschiedlichen Durchmesser aufweist.

8. Wälzlager nach einem der vorhergehenden Ansprüche, wobei die Haltenut (18) und/oder die Einführnuten (21) in einem Axialbereich der Bohrungsfläche (17) des Innenrings (2) angeordnet sind, der nicht mit den Wälzkörpern (4) überlappt.

9. Wälzlager nach einem der vorhergehenden Ansprüche, wobei der Außenring (3) mehrere axial verlaufende Gewindebohrungen (24) aufweist.

10. Wälzlager nach einem der vorhergehenden Ansprüche, wobei das Wälzlager als eine Komponente eines Elektromotors ausgebildet ist.
